# EUROPÄISCHE PATENTSCHRIFT

(11) **EP 2 023 253 B1**
(45) Veröffentlichungstag und Bekanntmachung des Hinweises auf die Patenterteilung: **02.03.2011**
(21) Anmeldenummer: 07114013.1
(22) Anmeldetag: 08.08.2007
(51) Int. Cl.: G06F 17/30

(54) **Verfahren und Vorrichtungen zur Validierung von Kontrollvorgängen mit mobilen Endgeräten**
Methods and apparatuses for validating control processes with mobile terminals
Procédés et dispositifs destinés à la validation de déroulements de contrôle à l'aide de terminaux mobiles

(43) Veröffentlichungstag der Anmeldung: 11.02.2009
(73) Patentinhaber: Technische Fachhochschule Wildau, 15745 Wildau (DE)
(72) Erfinder: Vandenhouten, Ralf, 14532, Kleinmachnow (DE); Kistel, Thomas, 15745, Wildau (DE)
(74) Vertreter: Hengelhaupt, Jürgen

(56) Entgegenhaltungen:
- WO-A-03/010989
- GB-A- 2 354 360
- US-A1- 2005 246 238
- US-A1- 2006 065 733

## Beschreibung

Die Erfindung betrifft ein Verfahren und eine Anordnung zur Validierung von Kontrollvorgängen mit mobilen Endgeräten sowie ein entsprechendes Computerprogramm, ein entsprechendes computerlesbares Speichermedium sowie eine spezifische Verwendung von mobilen Endgeräten.

Die Erfindung ist insbesondere einsetzbar zur effektiven Überwachung und Auswertung von Kontrollvorgängen.

Die zunehmende Verbreitung von mobilen Endgeräten, insbesondere von Mobiltelefonen und Organizern mit integrierter Digitalkamera macht Anwendungen möglich, die die Kommunikationsfähigkeit der Geräte in Kombination mit Bildaufnahmetechnik nutzen.

Über die klassische Anwendung der Mobiltelefonie zur Sprachübermittlung und die Versendung von SMS (Short Message Service) sowie die Aufnahme und die Versendung von Bildern hinaus, ist es bereits bekannt, mit mobilen Endgeräten Tickets zu kaufen, Fahrräder zu mieten und standortbezogene Informationen zu empfangen. So genannte standortbezogene Dienste basieren darauf, dass ein eingeschaltetes Mobiltelefon jederzeit über die Funkzelle, in der es sich befindet, zu orten ist. Dabei werden die Koordinaten der jeweiligen Funkzelle ausgewertet, und Mobilfunkbetreiber sowie mit ihnen kooperierende Drittanbieter, können dem Benutzer automatisch auf seine Position zugeschneiderte Informationen und Dienstleistungen anbieten. Beispiele hierfür sind Reiseführer, Restaurantführer, Routenplaner etc.

Die DE 103 36 320 A1 offenbart ein Verfahren zur Erlangung von Informationen aus einer Aufnahme, in welchem mittels eines mobilen Endgerätes, das eine Kamera oder Digitalisierer aufweist, eine digitale Aufnahme erstellt wird und zumindest ein Teil dieser Aufnahme von dem Gerät via datenloser Datenübertragung in ein Kommunikationsnetz versendet wird, wobei das Bild von einem angeschlossenen Computer hinsichtlich zumindest eines Teiles analysiert und interpretiert wird und wobei die Interpretation als Inhaltsinformation ausgegeben wird. Beispiele der Anwendung dieses Verfahrens sind mobile Parkingsysteme, Entstörung von Maschinen, Medikamentenerfassung.

Die DE 10 2005 033 001 A1 beschreibt ein Verfahren zur Optimierung von Kontrollvorgängen beim Einsatz mobiler Endgeräte. Diese Erfindung erweitert den Einsatzbereich mobiler Endgeräte mit integrierter Kamera durch die variable Aufteilung der Funktionen in Kamera und externe Einrichtung, die über ein Netz erreichbar ist und die eine zusätzliche Information, zum Beispiel Wartungsdokumente oder Überwachungsinformationen, an das mobile Endgerät zurück übermittelt und so dem Benutzer zur Verfügung stellt.

Nachteilig an dieser Lösung ist, dass zur Ausführung dieses Verfahrens externe Dienste benötigt werden.

In der Veröffentlichung US 2006/0065733 A1 wird eine Lösung beschrieben, bei welcher ein Codemuster mit der Kamera eines Mobiltelefons erfasst wird. Die Lösung sieht weiter vor, auch den Standort des Mobiltelefons durch Auswertung der Funkzellen-Koordinaten zu bestimmen. Allerdings erfolgt die Standortbestimmung nicht im Zusammenhang mit der Erfassung des Codemusters.

Ein Verfahren, bei dem die funkzellbasierte Standortermittlung durch zusätzliche Ortungsverfahren ergänzt wird, wird in der internationalen Patentanmeldung WO 03/010989 A1 vorgeschlagen. Dabei werden die Funkzellen-Koordinaten durch den Mobilfunkprovider bestimmt.

In der Veröffentlichung US 2005/0246238 A1 wird die Erstellung eines Verzeichnisses offenbart, bei dem mit Hilfe eines mit einem Barcodescanner und einem GPS-Empfänger (GPS = Global Positioning System) ausgestatteten Mobiltelefons Art und Standort eines Objektes erfasst und diese Daten in ein Verzeichnis eingetragen werden.

Ein Verfahren zur Erfassung und Decodierung von Barcodes mit Hilfe einer Kamera eines Mobiltelefons wird in der Veröffentlichung GB 2 354 360 A vorgestellt.

Der Erfindung liegt daher die Aufgabe zugrunde, ein Verfahren und eine Vorrichtung sowie ein Computerprogramm, ein computerlesbares Speichermedium und eine Verwendung anzugeben, mit welchen eine effektive und kostengünstige Validierung von Kontrollvorgängen ohne Nutzung von externen Lokalisierungs- oder Navigationsdiensten ermöglicht wird.

Diese Aufgabe wird erfindungsgemäß gelöst durch die Merkmale in den Ansprüchen 1 sowie 5 bis 8. Zweckmäßige Ausgestaltungen der Erfindung sind in den Unteransprüchen enthalten.

Mobile Endgeräte sind heutzutage standardmäßig mit leistungsfähigen Prozessoren ausgestattet. Hierdurch sind nicht nur Anwendungen möglich, die mit der Kamera aufgezeichneten Bilder im Originalzustand zu speichern und drahtlos zu übertragen, sondern auch solche Anwendungen, die bereits im mobilen Endgerät eine Auswertung der Bilder vornehmen, wie beispielsweise das Scannen und Decodieren von Code-Symbolen wie Bar-Codes oder Matrix-Codes.

Vorteilhaft ist die Anwendung der Erfindung insbesondere für Kontrollvorgänge, bei denen die Symbole an oder in der Nähe von Objekten angebracht sind und diese eindeutig identifizieren. Ein Kontrolleur, zum Bespiel ein Wartungsmitarbeiter, eine Reinigungskraft oder Wachpersonal scannt beim Besuch eines Objektes das zugehörige Symbol, das von der Anwendung decodiert und an eine Zentrale übertragen wird. Auf diese Weise kann zentral und für alle Objekte überwacht werden, welche Kontrollvorgänge durchgeführt wurden.

Ein dabei auftretendes Problem ist, dass die Code-Symbole nicht fälschungssicher sind. Eine Reinigungskraft könnte beispielsweise eine Kopie des Barcodes herstellen und diese zuhause scannen, anstatt das zu reinigende Objekt aufzusuchen.
Das erfindungsgemäße Verfahren löst dieses Problem, indem es die Code-Symbol-Daten mit den Funkzellen-Koordinaten-Daten des Mobilfunknetzes kombiniert und durch das mobiles Endgerät ein Vergleich eines aus den Code-Symbol-Daten und den Funkzellen-Koordinatendaten gebildeten Schlüssels mit einem Sollwert durchgeführt wird, um zu ermitteln, ob das Code-Symbol innerhalb einer vorgegebenen Funkzelle erfasst wurde.

Ein besonderer Vorteil der Erfindung besteht darin, dass zur Ausführung des Verfahrens keinerlei externe Dienste benötigt werden, indem folgende Verfahrensschritte realisiert werden:
- Erfassen eines Code-Symbols mit der Kamera des mobilen Endgerätes,
- Verarbeitung der erfassten Code-Symbol-Daten,
- Ermittlung von Funkzellen-Koordinaten-Daten des mobilen Endgerätes,
- Abspeicherung und/oder Übertragung der erfassten Code-Symbol-Daten und Funkzellen-Koordinaten-Daten.

Ein weiterer wesentlicher Vorteil der Erfindung liegt darin, dass zur Realisierung der Erfindung keine zusätzlichen Komponenten oder Geräte benötigt werden, sondern die Erfindung mit handelsüblichen Kamera-Handys realisiert werden kann. Dies gewährleistet niedrige Investitionskosten und macht das erfindungsgemäße Verfahren für den wachsenden Markt mobiler Erfassungs- und Kontrolllösungen interessant.

Ein weiterer Vorteil der Erfindung besteht darin, dass zusätzlich zu den erfassten Code-Symbol-Daten sowie den Funkzellen-Koordinaten-Daten Angaben über Datum und Uhrzeit erfasst werden.

Die Übertragung der erfassten Daten kann beispielsweise mittels SMS (Short Message Service) und/oder MMS (Multimedia Message Service) erfolgen.

Ein weiterer Vorteil der Erfindung besteht in der Decodierung der erfassten Code-Symbol-Daten im mobilen Endgerät, wodurch die Menge der zu übertragenden Daten erheblich reduziert wird.

Vorteilhaft ist ebenfalls, die decodierten Code-Symbol-Daten mit den Funkzellen-Koordinaten-Daten bereits im mobilen Endgerät zu verknüpfen, wobei die Verknüpfung der genannten Daten einen gemeinsamen Schlüssel ergeben. Die Verknüpfung der Daten ist beispielsweise durch ein einfaches Aneinanderfügen möglich. Es sind aber auch andere Verknüpfungslösungen denkbar, die mit Hashverfahren arbeiten oder die Schlüsselpaare in Tabellen abspeichern.

Die Erfindung soll nachstehend anhand von zumindest teilweise in den Figuren dargestellten Ausführungsbeispielen näher erläutert werden.

Es zeigen:
- Figur 1:: eine Übersichtsdarstellung des Systemaufbaus;
- Figur 2:: eine Blockdarstellung der zu realisierenden Verfahrensschritte.

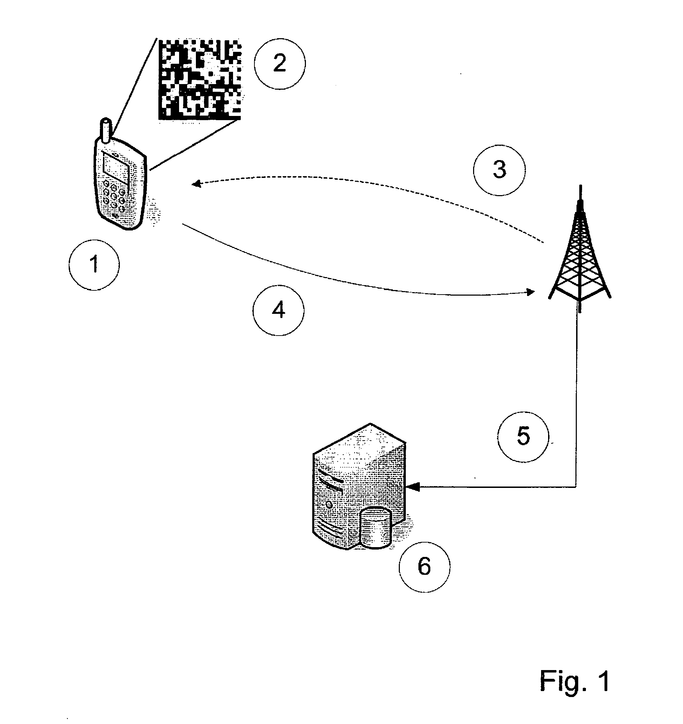

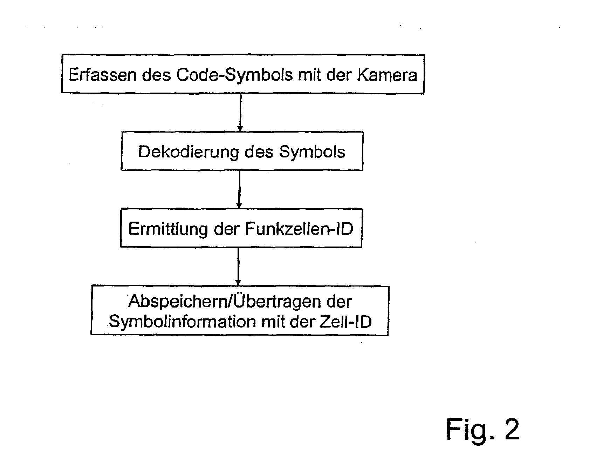

Wie in Figur 1 dargestellt, weist das erfindungsgemäße System die Hardware-Komponenten mobiles Endgerät 1, Code-Symbol 2, Funkzelle 3, Mobilfunknetz 4, Internet 5 und Computer-Datenbank 6 auf. Die hardware-seitigen Komponenten der Erfindung sowie die Realisierung der erfindungsgemäßen Verfahrensschritte sollen nachfolgend in einer Zusammenschau der Figuren 1 und 2 näher erläutert werden.

Die Kamera des mobilen Endgerätes 1 zeichnet bei einem Kontrollvorgang das Code-Symbol 2 auf, das dann mittels digitaler Bildverarbeitung im mobilen Endgerät ausgelesen und decodiert wird. Besonders geeignet sind hierfür zweidimensionale Matrix-Codes, die über Fehlerkorrekturverfahren verfügen und mit der Kamera des mobilen Endgerätes 1 gut erfasst werden können (z.B. der Datamatrix-Standard gemäß ISO/IEC 16022). Mit geeigneten, dem jeweiligen Symbolstandard entsprechenden mathematischen Verfahren lässt sich anhand des erfassten Bildes die im Code-Symbol 2 gespeicherte Originalinformation berechnen (decodieren).

Außerdem steht im mobilen Endgerät 1, das im Mobilfunknetz 4 eingebucht ist, die eindeutige Identifikationsnummer der zugehörigen Funkzelle 3 zur Verfügung, die durch Zugriff auf das Funkmodul des mobilen Endgerätes 1, z.B. über das entsprechende Betriebssystem des Gerätes, ausgelesen werden kann.

Diese wird nun zusammen mit der decodierten Symbolinformation abgespeichert und/oder per Mobilfunknetz 4 und Internet 5 an eine Zentrale übertragen und dort zum Beispiel in einer Datenbank 6 abgelegt. Im Gegensatz zu dem bekannten Stand der Technik werden hierfür keine externen Dienste benötigt, sondern lediglich die im mobilen Endgerät 1 ohnehin vorhandenen Informationen über die Funkzelle 3 verwertet. Da die Funkzellen-ID (FID) nur im Sendebereich des zugehörigen Sendemastes empfangen werden kann, ist auf diese Weise sichergestellt, dass das Code-Symbol 2 nicht außerhalb des entsprechenden Funkzellenbereiches aufgenommen wurde. Das Verfahren liefert somit eine geografische Validierung des Kontrollvorganges, ohne zusätzliche Geräte wie beispielsweise GPS-Empfänger zu benötigen. Die Verknüpfung der Code-Symbol-Daten mit den Funkzellen-Koordinaten-Daten erfolgt beispielsweise derart, dass aus den Code-Symbol-Daten und den Funkzellen-Koordinaten-Daten ein gemeinsamer Schlüssel durch einfaches "Aneinanderhängen" realisiert wird. Wenn also beispielsweise der Symbol-Code "XYZ123ABC" ist und die FID "3WZ12" lautet, würde sich der eindeutige Schlüssel "XYZ123ABC3WZ12" ergeben. Es sind darüber hinaus jedoch auch weitere Verknüpfungsverfahren möglich, die mit Hashverfahren arbeiten oder darauf basieren, dass die Schlüsselpaare in Tabellen abgespeichert werden, anhand derer das mobile Endgerät durch einen Soll-Ist-Vergleich selbst feststellen kann, ob das jeweilige Code-Symbol innerhalb der erwarteten Funkzelle erfasst wurde.

Es ist möglich, die verknüpften Daten nach jeder Erfassung sofort zu senden oder aber auch erst zu speichern und dann später insgesamt auszulesen bzw. zu übertragen.

### Bezugszeichenliste

- 1: mobiles Endgerät
- 2: Code-Symbol
- 3: Funkzelle
- 4: Mobilfunknetz
- 5: Internet
- 6: Computer/Datenbank

## Patentansprüche

1. Verfahren zur Validierung von Kontrollvorgängen mit mobilen Endgeräten (1), wobei Code-Symbol-Daten und Funkzellen-Koordinatendaten durch das mobile Endgerät (1) erfasst werden,
das Endgerät (1) mindestens eine digitale Kamera aufweist und durch das mobile Endgerät (1) folgende Verfahrensschritte realisiert werden
- Erfassen eines Code-Symbols (2) mit der Kamera des mobilen Endgerätes (1),
- Verarbeitung der erfassten Code-Symbol-Daten,
- Ermittlung von Funkzellen-Koordinatendaten des mobilen Endgerätes (1),
- Verknüpfen der decodierten Code-Symbol-Daten mit den Funkzellen-Koordinatendaten,
- Validierung des Kontrollvorgangs durch Vergleich eines aus den Code-Symbol-Daten und den Funkzellen-Koordinatendaten gebildeten Schlüssels mit einem Sollwert zur Ermittlung, ob das Code-Symbol (2) innerhalb einer vorgegebenen Funkzelle erfasst wurde,
- Abspeicherung und/oder Übertragung der erfassten Code-Symbol-Daten und Funkzellen-Koordinatendaten.

2. Verfahren nach Anspruch 1, **dadurch gekennzeichnet, dass** zusätzlich Datums- und Uhrzeitangaben erfasst werden.

3. Verfahren nach Anspruch 1, **dadurch gekennzeichnet, dass** die Verarbeitung der erfassten Code-Symbol-Daten eine Decodierung ist.

4. Verfahren nach Anspruch 1, **dadurch gekennzeichnet, dass** die Übertragung der erfassten Daten mittels Short Message Service, SMS, und/oder Multimedia Message service, MMS, erfolgt.

5. Anordnung zur Validierung von Kontrollvorgängen mit mobilen Endgeräten (1), wobei die Endgeräte (1) mindestens eine digitale Kamera zur Erfassung eines Code-Symbols (2) sowie
- Mittel zur Verarbeitung der erfassten Code-Symbol-Daten,
- Mittel zur Ermittlung von Funkzellen-Koordinaten-daten des mobilen Endgerätes (1),
- Mittel zum Verknüpfen der decodierten Code-Symbol-Daten mit den Funkzellen-Koordinatendaten,
- Mittel zur Validierung des Kontrollvorgangs durch Vergleich eines aus den Code-Symbol-Daten und den Funkzellen-Koordinatendaten gebildeten Schlüssels mit einem Sollwert zur Ermittlung, ob das Code-Symbol (2) innerhalb einer vorgegebenen Funkzelle erfasst wurde,
- Mittel zur Abspeicherung und/oder Übertragung der erfassten Code-Symbol-Daten und Funkzellen-Koordinaten-Daten
aufweisen.

6. Computerprogramm, das es einem Computer ermöglicht, nachdem es in den Speicher des Computers geladen worden ist, ein Verfahren zur Validierung von. Kontrollvorgängen mit mobilen Endgeräten (1) gemäß mindestens einem der Ansprüche 1 bis 4 durchzuführen.

7. Computerlesbares Speichermedium, auf dem mindestens ein Programm gespeichert ist, das es einem Computer ermöglicht, nachdem es in den Speicher des Computers geladen worden ist, ein Verfahren zur Validierung von Kontrollvorgängen mit mobilen Endgeräten (1) gemäß mindestens einem der Ansprüche 1 bis 4 durchzuführen.

8. Verfahren, bei dem ein Computerprogramm nach Anspruch 6 aus einem elektronischen Datennetz, wie beispielsweise aus dem Internet (5), auf eine an das Datennetz angeschlossene Datenverarbeitungseinrichtung heruntergeladen wird.

## Claims

1. Method for validating control processes with mobile terminals (1), wherein code symbol data and cell coordinate data are acquired by the mobile terminal (1), the terminal (1) comprises at least one digital camera and the following method steps are realized by the mobile terminal (1):
- acquiring a code symbol (2) with the camera of the mobile terminal (1),
- processing the acquired code symbol data,
- determining cell coordinate data of the mobile terminal (1),
- combining the decoded code symbol data with the cell coordinate data,
- validating the control process by comparing a key formed from the code symbol data and the cell coordinate data with a set value for determining whether the code symbol (2) was acquired within a predetermined cell,
- storing and/or transmitting the acquired code symbol data and cell coordinate data.

2. Method according to claim 1, **characterized in that** additionally date and time data are acquired.

3. Method according to claim 1, **characterized in that** the processing of the acquired code symbol data is a decoding.

4. Method according to claim 1, **characterized in that** the transmission of the acquired data is accomplished by means of short message service, SMS, and/or multimedia message service, MMS.

5. Arrangement for validating control processes with mobile terminals (1), wherein the terminals (1) comprise at least one digital camera for acquiring a code symbol (2) and
- means for processing the acquired code symbol data,
- means for determining cell coordinate data of the mobile terminal (1),
- means for combining the decoded code symbol data with the cell coordinate data,
- means for validating the control process by comparing a key formed from the code symbol data and the cell coordinate data with a set value for determining whether the code symbol (2) was acquired within a predetermined cell,
- means for storing and/or transmitting the acquired code symbol data and cell coordinate data.

6. Computer program adapted to allow a computer, after it has been loaded into the memory of the computer, to perform a method for validating control processes with mobile terminals (1) according to at least one of claims 1 to 4.

7. Computer-readable storage medium on which at least one program adapted to allow a computer, after it has been loaded into the memory of the computer, to perform a method for validating control processes with mobile terminals (1) according to at least one of claims 1 to 4 is stored.

8. Method, wherein a computer program according to claim 6 is downloaded from an electronic data network such as the internet (5) to a data processing device connected to the data network.

## Revendications

1. Procédé destiné à la validation de déroulements de contrôle à l'aide de terminaux (1) mobiles, dans lequel des données de symboles de code et des données de coordination de cellules radio sont saisies par le terminal (1) mobile,
le terminal (1) mobile comprenant au moins une caméra numérique, et des étapes de procédé suivantes étant réalisées par le terminal (1) mobile :
- saisie d'un symbole (2) de code par la caméra du terminal (1) mobile,
- traitement des données de symboles de code saisies,
- détermination de données de coordination de cellules radio du terminal (1) mobile,
- combinaison des données de symboles de code décodées avec les données de coordination de cellules radio,
- validation du déroulement de contrôle par une comparaison d'une clé formée des données de symboles de code et des données de coordination de cellules radio avec une valeur de consigne afin de déterminer si le symbole (2) de code a été saisi à l'intérieur d'une cellule radio prédéterminée,
- stockage et/ou transfert des données de symboles de code et des données de coordination de cellules radio saisies.

2. Procédé selon la revendication 1, **caractérisé en ce que** des données de date et d'heure sont saisies additionnellement.

3. Procédé selon la revendication 1, **caractérisé en ce que** le traitement des données de symboles de code saisies est un décodage.

4. Procédé selon la revendication 1, **caractérisé en ce que** le transfert des données saisies s'effectue par short message service, SMS, et/ou par multimedia message service, MMS.

5. Agencement destiné à la validation de déroulements de contrôle à l'aide de terminaux (1) mobiles, dans lequel les terminaux (1) mobiles comprennent au moins une caméra numérique destinée à saisir un symbole (2) de code, et comprennent :
- des moyens destinés au traitement des données de symboles de code saisies,
- des moyens destinés à la détermination des données de coordination de cellules radio du terminal (1) mobile,
- des moyens destinés à la combinaison des données de symboles de code décodées avec les données de coordination de cellules radio,
- des moyens destinés à la validation du déroulement de contrôle par la comparaison d'une clé formée des données de symboles de code et des données de coordination de cellules radio avec une valeur de consigne afin de déterminer si le symbole (2) de code a été saisi à l'intérieur d'une cellule radio prédéterminée,
- des moyens destinés au stockage et/ou transfert des données de symboles de code et des données de coordination de cellules radio saisies.

6. Programme d'ordinateur permettant à un ordinateur - après avoir été chargé dans la mémoire de l'ordinateur - d'effectuer un procédé destiné à la validation de déroulements de contrôle à l'aide de terminaux (1) mobiles selon l'au moins une des revendications 1 à 4.

7. Support de stockage lisible par ordinateur sur lequel est stocké au moins un programme qui permet à un ordinateur - après avoir été chargé dans la mémoire de l'ordinateur - d'effectuer un procédé destiné à la validation de déroulements de contrôle à l'aide de terminaux (1) mobiles selon l'au moins une des revendications 1 à 4.

8. Procédé dans lequel un programme d'ordinateur selon la revendication 6 est téléchargé - à partir d'un réseau de données, comme par exemple à partir de l'internet (5) - sur un dispositif de traitement de données connecté au réseau de données.
